(19) Europäisches Patentamt
European Patent Office
Office européen des brevets

(11) **EP 4 099 213 A1**

(12) **EUROPEAN PATENT APPLICATION**

(43) Date of publication:
**07.12.2022 Bulletin 2022/49**

(21) Application number: **21176982.3**

(22) Date of filing: **31.05.2021**

(51) International Patent Classification (IPC):
**G06K 9/00** (2022.01)

(52) Cooperative Patent Classification (CPC):
**G06K 9/6271; G06V 10/34; G06V 10/426; G06V 40/23**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken 471-8571 (JP)**
• **Max-Planck-Institut für Informatik**
**66123 Saarbrücken (DE)**

(72) Inventors:
• **OLMEDA REINO, Daniel**
**1140 BRUSSELS (BE)**
• **CHEN, Di**
**66123 SAARBRÜCKEN (DE)**
• **ZHANG, Shanshan**
**66123 SAARBRÜCKEN (DE)**
• **SCHIELE, Bernt**
**66123 SAARBRÜCKEN (DE)**

(74) Representative: **Cabinet Beau de Loménie**
**158, rue de l'Université**
**75340 Paris Cedex 07 (FR)**

(54) **A METHOD FOR TRAINING A CONVOLUTIONAL NEURAL NETWORK TO DELIVER AN IDENTIFIER OF A PERSON VISIBLE ON AN IMAGE, USING A GRAPH CONVOLUTIONAL NEURAL NETWORK**

(57)     A method for training a convolutional network to deliver an identifier of a person visible on an image when the image is inputted to the convolutional neural network, the method comprising:
a. obtaining a training dataset including images of a person and skeleton representations,
b. obtaining feature maps from the convolutional neural network,
c. extracting features using the skeleton representations,
d. forming graphs using the features and processing them in a graph convolutional neural network,
e. calculating a loss,
f. jointly training the two neural networks.

**FIG. 1**

**Description**

Field of the disclosure

The present disclosure is related to the field of data processing using artificial neural networks (neural networks hereinafter), for example to perform re-identification of a person in an image or a video sequence.

Description of the Related Art

It has been proposed to implement visual surveillance systems, for example to ensure public safety. Visual surveillance systems play a vital role in modern society to ensure public safety. The massive data collected by the systems raises the need for automatic visual understanding techniques such as person re-identification (re-ID). Person re-ID aims to identify a same person across different cameras with non-overlapping views, which is usually achieved by calculating the similarities between the representations of images. Hence, a person of interest can be tracked by means of a re-ID method.
In the prior art, image-based person re-ID methods have been proposed. These usually serve as baseline for video-based methods which will be discussed hereinafter. While these methods initially were based on handcrafted features, newer methods rely on the use of convolutional neural networks. The re-ID problem can be formulated as a classification or a ranking at training time when using a convolutional neural network. More recent methods have proposed to divide the final convolutional neural network feature maps into several parts on which average pooling is performed, instead of extracting global features using global average pooling. The method known as PCB (Yifan Sun, Liang Zheng, Yi Yang, Qi Tian, and Shengjin Wang. Beyond part models: Person retrieval with refined part pooling (and a strong convolutional baseline). In ECCV, 2018.) partitions feature maps into horizontal stripes and concatenates the pooled stripe features to generate the final features, which contain richer spatial information and thus achieve better performance than the simple global features.
Video-based Person Re-Identification has also been proposed. For example, a possible solution for video-based re-ID is to lift image-based re-ID methods by aggregating multi-frame features via different operations, such as mean/max pooling, recurrent neural networks (RNNs) and temporal attention. Another strategy known from the prior art is to capture the spatial and temporal information simultaneously by 3D convolution. Despite their favorable performance, 3D convolutions usually require more computational and memory resources, which limits their potential for real-world applications.
From the prior art Pose-assisted Person Re-ID has also been proposed. These methods benefit from recent advances on pose estimation, and have permitted using person keypoints (e.g. joints) to facilitate person re-ID. It has been proposed to focus on generating person images with keypoints which are later used as extra training data. Other known methods propose to use person keypoints as a spatial cue for aligning body parts or for highlighting non-occluded regions.
In addition to convolutional neural networks, a new type of network has been proposed in the form of graph convolutional neural networks. These networks have proved to be an answer to the need for processing non-Euclidean data. In particular, it has been proposed to exploit graph convolutional neural networks for unstructured relationship learning for re-ID.
There is a need for more efficient re-ID methods.

Summary of the disclosure

The present disclosure overcomes one or more deficiencies of the prior art by proposing a method for training a convolutional neural network to deliver an identifier of a person visible on an image when the image is inputted to the convolutional neural network, the method comprising:

    a. obtaining a training dataset including :

    - at least one sequence of a plurality of consecutive images on which a same person is visible in a scene at a plurality of different consecutive instants, and
    - annotations including an expected identifier of the person (i.e. the expected output of the convolutional neural network when an image from the sequence of the person is inputted to this neural network - the ground truth), the annotations also indicating where, on each image of the plurality of consecutive images, a skeleton representation of the person is positioned (i.e. the nodes are located where the person's joints are in accordance with the skeleton representation), the skeleton representation being a graph having keypoints located at the joints of the skeleton and spatial edges connecting the keypoints so as to form a given skeleton representation,

b. inputting the plurality of consecutive images of the same person to the convolutional neural network so as to obtain, for each image, N feature maps outputted by N (different) layers of the convolutional neural network associated with an image,

c. for each feature map obtained in step b from a same layer of the convolutional neural network, extracting the features located at keypoint relative locations of the skeleton representation obtained from the annotations of the image associated with the feature map, so as to obtain keypoint features of a layer of the convolutional neural network,

d. forming consecutively N graphs each associated with a layer of the convolutional neural network and consecutively processing each graph in a respective stage of a graph convolutional neural network having N-1 stage, each graph having:

- nodes relatively located (i.e. the location is relative to the size of the feature map, it is adapted to it from the annotations) at every keypoint feature obtained at step c for the associated layer,
- spatial edges connecting the keypoints obtained from a same feature map so as to form a skeleton representation, and
- temporal edges connecting the keypoints obtained from feature maps associated with the layer and obtained from consecutive images and corresponding to a same keypoint in the skeleton representation,
  wherein the value of each node of each graph is equal to the sum of the keypoint feature in the associated layer at the corresponding relative location and, if it exists, the corresponding node value outputted by the graph convolutional stage which has processed the preceding graph (the graph are formed successively and processed when the needed values are available, here, an element wise sum is performed for all the graphs except the first one where only the keypoint features are used),

e. processing the graphs formed in step d in the graph convolutional neural network having N-1 stages to obtain N-1 processed graphs, the graph convolutional neural network being configured to be able to output an identifier of a person,

f. obtaining at least one identifier of a person from the convolutional neural network for each image the plurality of consecutive images and from the output of the graph convolutional neural network so as to calculate a loss using the expected identifier of the person, and

g. jointly back-propagating the loss calculated in step f in the convolutional neural network and in the graph convolutional neural network.

An identifier of a person can be a vector or a set of vectors, and the structure of this identifier is selected according to the application by selecting a proper structure for the convolutional neural network (any suitable convolutional neural network able to receive an image as input and able to deliver a person identifier in the form of a vector or a set of vectors). During inference (also called testing time), when a frame is inputted to the convolutional the convolutional neural network outputs one identifier. When another frame showing the same person is inputted, the identifier outputted should be very close to the previously outputted identifier, and the identifier should be remote if the person is another person. If each frame of a video sequence is inputted to the convolutional neural network, re-ID is then performed.

The sequence of a plurality of consecutive images on which a same person is visible can be a video sequence filmed by a single camera. Each image of this sequence can be centered on the person and may only show this person. For example, the images can be obtained by using a person detector on initial images which will determine the location of a bounding box surrounding a person visible on an initial image, and cropping the initial image using the bounding box will allow obtaining an image which will belong to the sequence of image. It should be noted that the training dataset can comprise multiple sequences of different persons, each having different expected identifiers; however, the training will be performed by processing in the convolutional neural network sequences of one person at a time.

The annotations can be obtained either automatically or manually.

Skeleton representations in the form of graphs are known to the person skilled in the art. For example, the following documents disclose skeleton representations:

- Sijie Yan, Yuanjun Xiong, and Dahua Lin. Spatial temporal graph convolutional networks for skeleton-based action recognition. In AAAI, 2018.
- Na Li, Xinbo Zhao, and Chong Ma. A model-based gait recognition method based on gait graph convolutional networks and joints relationship pyramid mapping. arXiv preprint arXiv:2005.08625, 2020.
- Tsung-Yi Lin, Michael Maire, Serge Belongie, James Hays, Pietro Perona, Deva Ramanan, Piotr Doll'ar, and C Lawrence Zitnick. Microsoft coco: Common objects in context. In ECCV, 2014.

Preferably, the skeleton representation of document "Microsoft coco: Common objects in context" is used.

In step c, multiple feature maps are obtained, for example each being outputted by a stage of the convolutional neural network if the neural network has multiple stages. The keypoint relative locations correspond to the keypoint locations in the images given a size ratio between the image and the feature map (which may be smaller or larger than the inputted image). At this stage, there are enough features to form a skeleton representation graph for each feature map.

Each of the N graphs is a graph formed from sub-graphs that have the structure of the skeleton representation. With respect to the methods of the prior art, a graph is formed using features from not only different locations (the keypoints/nodes), but also different instants in time (each image is associated with a different instant in time).

The processing of the graphs by means of a graph convolutional neural network can be performed using any graph convolutional neural network configured to receive the above defined graph structure and to output a graph having the same graph structure.

By way of example, the graph convolution operation can be similar to the one of document "Deepergcn: All you need to train deeper gens" (Guohao Li, Chenxin Xiong, Ali Thabet, and Bernard Ghanem. arXiv preprint arXiv:2006.07739, 2020).

The graph convolutional neural network should be differentiable so that a loss can be back-propagated through it.

Concerning step f, calculating a loss can be performed by comparing the outputs of the convolutional neural network and of the graph convolutional neural network to the expected identifier. For example, the training dataset will include different sequences of different persons, and the annotations will include the respective expected identifiers.

It should be noted a single loss is calculated for the sequence, and that this loss is back-propagated jointly through both the convolutional neural network and the graph convolutional neural network (in a single step).

The above method overcomes some of the limitation of convolutions in video-based person re-ID by using poses in the form of skeleton representations and graph convolutions.

Since human body keypoints are representative for distinct shapes of different people, the graph here is based on those keypoints. Here, the features located at a person's joints (keypoints) are extracted from the convolutional neural network feature maps, which are then used as the node features for constructing a spatial-temporal graph. The graph-structured data is processed with graph convolutions, which are not bounded by small-scale, rectangular-shaped kernels of normal convolutions (such as the ones of the convolutional neural network).

From this graph structure, it appears that should a keypoint be located at a person's left shoulder, it will interact for example in the graph convolutions with features from the right shoulder, the left elbow, the left hip (there are a spatial edges between them), also, this left shoulder will interact with the corresponding left shoulders from t-1 and t+1 (if t is the instant of this keypoint). Thus, convolutions can be performed without misalignments issues, and with information which would have otherwise not been processed together. This is advantageously performed for all the keypoints of the skeleton representation, which, through graph convolution, obtain information from distant keypoints in space and in time.

In the above method, a graph convolutional neural network is attached to a convolutional neural network during the training phase. It should be noted that this increases the computational cost and memory consumption during the training. However, the convolutional neural network can be operated independently from the graph convolutional neural network at testing time (inference), which will then limit the computational cost when the convolutional neural network is used alone.

Here, the graph convolutional neural network is used as a parallel branch alongside the convolutional neural network only during the training, and which acts as a "training guide". Namely, supervision signals (i.e. the gradients to be back-propagated) with spatial-temporal information flow back from the graph convolutional to the convolutional neural network by backpropagation. Therefore, keypoint locations on the CNN feature maps receive feedback from a more diverse set of spatial and temporal locations, especially for the shallow layers which have small receptive fields.

It should be noted that step e and f are performed simultaneously, and that obtaining node values, except for the first graph, will require that graph convolutions have been performed on the graphs.

Advantageously, the above defined method can be adapted to different types of convolutional neural networks that can receive images as input and that can deliver an identifier.

According to a particular embodiment, N equals 5.

This particular embodiment has been observed to provide good training results. In this particular embodiment, there are 4 stages in the graph convolutional neural network.

According to a particular embodiment, the graph convolution operation for obtaining a value at a node of a layer $l + 1$ of the graph convolutional neural network is calculated using the value of the corresponding node of layer $l$ and the values of the nodes of layer I connected by spatial and temporal edges to this node.

By way of example, the graph convolution operation can be analogous to the one of document "Deepergcn: All you need to train deeper gens" mentioned above.

According to a particular embodiment, step f comprises obtaining a number k of identifiers by a pooling operation from the final feature map of the convolutional neural networks, obtaining k identifiers by a pooling operation on the final graph of the graph convolutional neural network, with each identifier obtained from the graph convolutional neural network being associated with a different portion of the graph.

The different portions of the graph can overlap one another. For example, a portion can correspond to a limb, another portion can correspond to the upper body, etc.

This graph pooling can use the method of document "A model-based gait recognition method based on gait graph convolutional networks and joints relationship pyramid mapping" (Na Li, Xinbo Zhao, and Chong Ma. arXiv preprint arXiv: 2005.08625, 2020).

The invention also provides a system for training a convolutional neural network to deliver an identifier of a person visible on an image when the image is inputted to the convolutional neural network, comprising a processor and configured to perform the method as defined above.

The invention also provides a convolutional neural network trained by the method as defined above. For example, this convolutional neural network can be stored on a computer readable storage medium.

The invention also proposes a system including the convolutional neural network as defined above stored on a support (for example a computer readable storage medium) and a camera (for acquiring images that can be processed by the convolutional neural network.

The invention also proposes a vehicle including the system as defined above.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Brief description of the drawings

How the present disclosure may be put into effect will now be described by way of example with reference to the appended drawings, in which:

- figure 1 is a schematic representation of training method,
- figures 2A, 2B, and 2C partially or fully represent the graph,
- figure 3 shows the graph convolution operation,
- figures 4A and 4B show how, during training, multiple outputs are obtained,
- figure 5 is a schematic representation of a system for training, and
- figure 6 is a schematic representation of a vehicle.

Description of the embodiments

An exemplary method for training a convolutional neural network to deliver an identifier of a person visible on an image when the image is inputted to the convolutional neural network will now be described.

In order to perform the training, a graph convolutional neural network will also be used to process data during training in parallel with the convolutional neural network.

The backpropagation of losses will be performed jointly throughout both the convolutional neural network and throughout the graph convolutional neural network.

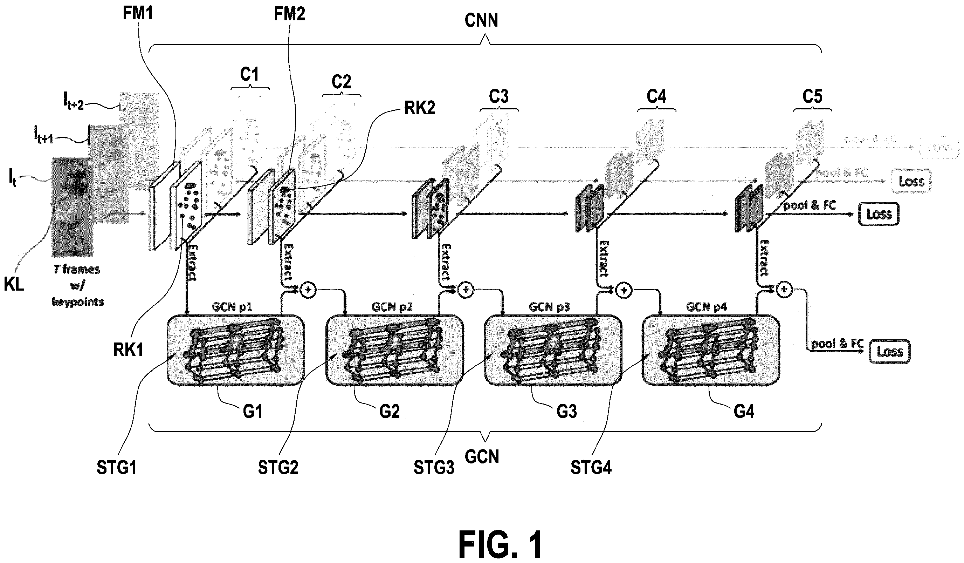

These two neural networks are shown on figure 1. On this figure CNN designates the convolutional neural network composed of five stages C1, C2, C3, C4, and C5 each having a final layer delivering a feature map.

By way of example, a stride-1 convolution can be used at the beginning of stage C5 which maintains the spatial size of the feature maps as this has been observed to slightly improve the re-ID performance.

By way of example, the convolutional neural network may have the structure described in the following document:

- Yifan Sun, Liang Zheng, Yi Yang, Qi Tian, and Shengjin Wang. Beyond part models: Person retrieval with refined part pooling (and a strong convolutional baseline). In ECCV, 2018

The convolutional neural network may have 4 horizontal parts as disclosed in the following document:

- Kaiming He, Xiangyu Zhang, Shaoqing Ren, and Jian Sun. Deep residual learning for image recognition. In CVPR,

Any convolutional neural network configured to be used for person re-ID, or at least for delivering an identifier for a person visible on an image can be used.

It should be noted that after training, the task of Re-ID can be performed by processing every frame of a sequence with the convolutional neural network.

In a first step, the method comprises obtaining a training dataset with T frames, including :

- at least one sequence of a plurality of consecutive images on which a same person is visible in a scene at a plurality of different consecutive instants, and
- annotations including an expected identifier of the person, the annotations also indicating where, on each image of the plurality of consecutive images, a skeleton representation of the person is positioned, the skeleton representation being a graph having keypoints located at the joints of the skeleton and spatial edges connecting the keypoints so as to form a given skeleton representation.

On figure 1, three images of a sequence are shown: $I_t$, $I_{t+1}$, and $I_{t+2}$. The corresponding keypoint locations KL are shown on these images. These images can be part of a sequence of 32 frames of size 256*128. These images can be centered on the person and be obtained by cropping larger images around the person.

Each image will be inputted to the convolutional neural network so as to obtain 5 feature maps (FM1 and FM2 are referenced in the figure, obtained using $I_t$), here delivered by the final layer of each stage, and associated with this final layer.

For each feature map obtained previously from a same layer of the convolutional neural network (for example feature maps FM1 etc...), extracting the features located at keypoint relative locations (if the feature map has a resolution which differs from the one of the initial image, the locations can be relatively defined by a scale factor) of the skeleton representation obtained from the annotations of the image associated with the feature map, so as to obtain keypoint features of a layer of the convolutional neural network (RK1 and RK2 are identified on the figure).

Then, 4 graphs STG1, STG2, STG3, and STG4 are formed consecutively, each being associated with a layer of the convolutional neural network (the layer outputting FM1 is associated with STG1, etc.), and the graphs are consecutively processed in a respective stage G1, G2, G3, G4 of the graph convolutional neural network GCN having 4 stages. These graphs have:

- nodes relatively located at every keypoint feature obtained at step c for the associated layer (the node has a location which is defined by the relative location of the keypoint feature),
- spatial edges connecting the keypoints obtained from a same feature map (for example from FM1) so as to form a skeleton representation, and
- temporal edges connecting the keypoints obtained from feature maps associated with the layer (for example FM1, FM2) and obtained from consecutive images (here It and It+1) and corresponding to a same keypoint in the skeleton representation,

wherein the value of each node of each graph is equal to the sum of the keypoint feature in the associated layer at the corresponding relative location (the one from the annotations, adapted to the size of the feature map) and, if it exists, the corresponding node value (at the same position in the graph) outputted by the graph convolutional neural network stage which has processed the preceding graph (i.e. an element wise sum is performed for all the graphs except the first one where only the keypoint features are used),

After pooling and processing by fully-connected layers, loss values can be calculated, as shown on the figure. From these losses, it is possible to perform a joint back-propagation in both the convolutional neural network and the graph convolutional neural network.

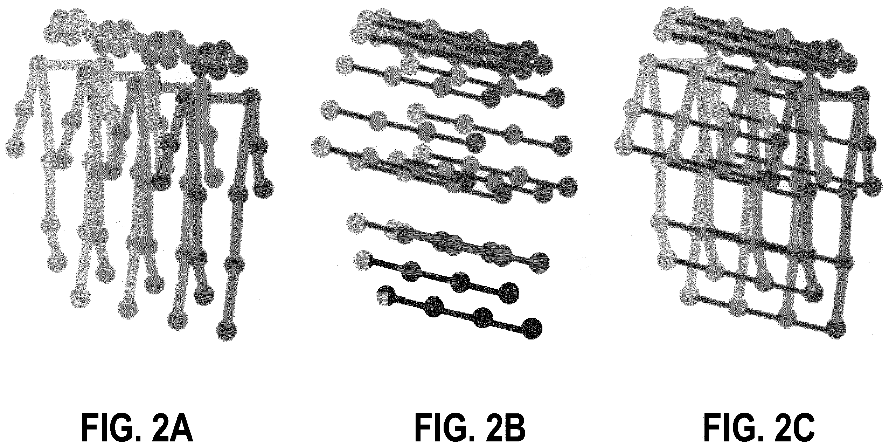

The graph formulation will now be described in more detail. A sequence of persons joints/keypoints is represented by a spatial-temporal graph $G = (V, E)$. The node set $V = \{v_{ti}|t = 1,...,T, i = 1, ...N\}$ includes all the joints in the sequence mentioned above, where $T$ is the number of frames and $N$ is the number of keypoints in each frame. Here, the skeleton representation from document "Microsoft coco: Common objects in context" is used, which makes $N = 17$. The edge set $E$ is composed of two subsets, namely a spatial subset $E_S$ and a temporal subset $E_T$. The spatial edges, denoted as $E_S = \{(v_{ti}, v_{tj})|(i, j) \in H, t = 1,....T\}$, is a direct representation of natual human topology $H$ in each frame, visible on figure 2A.

The temporal subset $E_T = \{(v_{ti}, v_{(t+1)i}), |t = 1,..., T, i = 1, ...,N\}$ comprises connections of the same joints between frames $t$ and $t + 1$. This is illustrated in figure 2B (the temporal and spatial edges are both shown on figure 2C).

It should be noted that there are different possibilities for the features of each graph node. For example, in the following two documents:

- Sijie Yan, Yuanjun Xiong, and Dahua Lin. Spatial temporal graph convolutional networks for skeleton-based action recognition. In AAAI, 2018.

- Na Li, Xinbo Zhao, and Chong Ma. A model-based gait recognition method based on gait graph convolutional networks and joints relationship pyramid mapping. arXiv preprint arXiv:2005.08625, 2020,

The keypoint coordinates are used in these documents as node features in order to capture the action or gait information. Here, instead, visual features extracted from the convolutional neural network feature maps are used as graph node features. This allows capturing human-oriented non-local relationships between different locations, rather than modeling movement information.

More precisely, the feature for node $v$ at layer $l$ of the graph convolutional neural network is represented as $h_v^{(l)}$. For the first layer of the first stage of the graph convolutional neural network $h_v^{(l)}$ is the keypoint feature extracted (or "cropped") from the feature map outputted by the first stage C1 of the convolutional neural network (there is no previous graph convolutional stage). For the hidden layers inside each graph convolutional neural network stage, $h_v^{(l)}$ is the latent output from layer $l$ - 1. The input features for the first layers of stages G2 to G4 are linear combinations of the latent outputs and features extracted from the convolutional neural network:

$$h_v^{(l)} \leftarrow W_{down}^T (W_{up}^T h_v^{(l)} + f(i,j))$$

Wherein $f$ denotes the convolutional neural network feature map and $(i,j)$ are the spatial coordinates of node $v$; $W_{up}^T$ and $W_{down}^T$ are weights of fully-connected layers to match the dimensions of $h_v^{(l)}$ and $f(i,j)$.

Once the graph topology and the node features are defined, graph convolutions are applied to update the node features (i.e. they are processed by the graph convolutional neural network stages). By way of example, it is possible to use the graph convolutions from the following document:

- Guohao Li, Chenxin Xiong, Ali Thabet, and Bernard Ghanem. Deepergcn: All you need to train deeper gcns. arXiv preprint arXiv:2006.07739, 2020.

This example of graph convolution block takes advantage of generalized message aggregation, modified skip connections, and a normalization method. The block consists of a series of operations, including normalization, non-linear activation, dropout, graph convolution and residual addition.

Of a graph convolutional neural network layer $l$, the graph convolution is composed of three actions, namely message construction $\rho$, message aggregation $\zeta$, and vertex update $\phi$. They are respectively defined as follows:

$$m_{vu}^{(l)} = \rho^{(l)}\left(h_v^{(l)}, h_u^{(l)}\right), u \in N(v)$$

$$m_v^{(l)} = \zeta^{(l)}(\{m_{vu}^{(l)} | u \in N(v)\})$$

$$h_v^{(l+1)} = \phi^{(l)}(h_v^{(l)}, m_v^{(l)})$$

Wherein $N(v)$ is the neighborhood of node/vertex $v$ (the nodes having shared edges with $v$); $m_{vu}^{(l)}$ is the message passed from node $u$ to node $v$; and $m_v^{(l)}$ is the aggregated messages for node $v$. It should be noted that here, edge features are not used, and the message construction function $\rho^{(l)}(.)$ is defined as:

$$m_{vu}^{(l)} = \rho^{(l)}\left(h_v^{(l)}, h_u^{(l)}\right) = ReLU\left(h_u^{(l)}\right) + \epsilon$$

Wherein *ReLU* is the Rectified Linear Unit function and $\varepsilon$ is a small constant introduced for numeral stability. The above equation means that the rectified node features are directly used as neighbor messages. For the message aggregation function $\zeta^{(l)}(.)$, the form of softmax with a learnable temperature $\tau$ is used:

$$m_v^{(l)} = \sum_{u \in N(v)} \frac{e^{\frac{1}{\tau} m_{vu}^{(l)}}}{\sum_{i \in N(v)} e^{\frac{1}{\tau} m_{vi}^{(l)}}} \cdot m_{vu}^{(l)}$$

The above equation can be regarded as a weighted summation of all the neighbor messages. The aggregated message $m_v^{(l)}$ is then used to update the node feature of *v* with a function $\phi^{(l)}(.)$:

$$h_v^{(l+1)} = \phi^{(l)}\left(h_v^{(l)}, m_v^{(l)}\right) = MLP\left(h_v^{(l)} + m_v^{(l)}\right)$$

Wherein *MLP*(.) is a multi-layer perceptron with two fully connected layers.

It should be noted that the invention is not limited to the above graph convolutions. Other solutions can be considered and more generally, the graph convolution operation for obtaining a value at a node of a layer *l* + 1 of the graph convolutional neural network is calculated using the value of the corresponding node of layer *l* and the values of the nodes of layer l connected by spatial and temporal edges to this node.

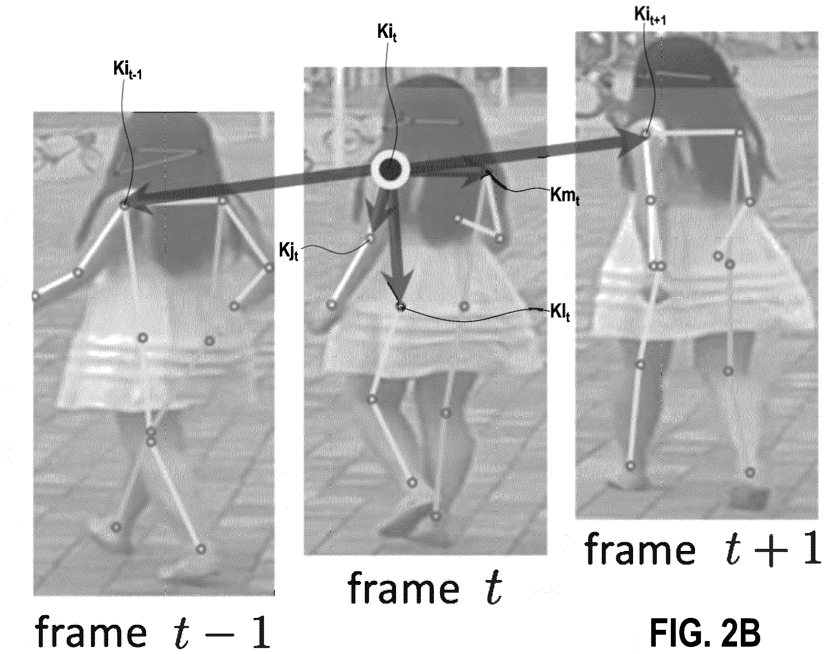

This is schematically represented on figure 3 wherein for a keypoint/node *Kit* for a frame at instant *t,* the keypoints to be considered will be the neighborhood comprising:

- Keypoints *Kjt, Klt, Kmt* of the frame of instant *t*
- The corresponding keypoint in the skeleton representation of the frame of instant *t - 1, Kit - 1,* and
- The corresponding keypoint in the skeleton representation of the frame of instant *t - 1, Kit + 1*.

Additionally to the four stages, the graph convolutional neural network comprises a pooling layer and performs a mapping into discriminative embeddings.

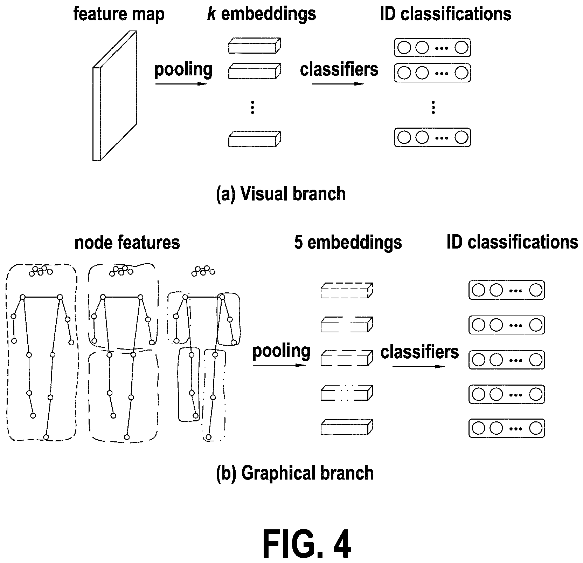

This is shown on figure 4B and is performed in a manner which is analogous to the pooling performed in document:

- Na Li, Xinbo Zhao, and Chong Ma. A model-based gait recognition method based on gait graph convolutional networks and joints relationship pyramid mapping. arXiv preprint arXiv:2005.08625, 2020.

This method combines multiple partition patterns and uses average pooling within each part. Specifically, there are three types of discriminative embeddings:

1. Average feature of the whole body,
2. Upper and lower body separately averaged features, and
3. Averaged pair features of left arm and right leg, and of right arm and left leg.

All the features are then mapped with a fully connected layer without weight sharing. In total, 5 discriminative embeddings are obtained and denoted as $\left\{x_g^i \middle| i = 1, \dots, 5\right\}_t$ for frame *t,* which are further supervised by training objectives.

As visible on figure 4A, a spatial pooling is performed on the final convolutional neural network feature map to obtain a plurality of embeddings.

We will now describe in greater detail the computation of a loss according to an example.

For a video sequence with T frames, a forward pass through the model shown on figure 1 generates two sets of embeddings, one from the convolutional neural network and one from the graph convolutional neural network.

The set of embeddings obtained from the convolutional neural network is denoted as $\left\{x_c^i \mid i = 1, \ldots, k\right\}_t$, with $t = 1, \ldots, T$, and where k is a hyper parameter chosen in accordance with the convolutional neural network design. By way of example, k = 1 for a convolutional neural network such as the one described in the following document and which can be used to implement the present method:

- Zhedong Zheng, Liang Zheng, and Yi Yang. A discriminatively learned cnn embedding for person reidentification. ACM Transactions on Multimedia Computing, Communications, and Applications (TOMM), 14(1):1-20, 2017.

Alternatively, k can be equal to the number of horizontal stripes (4 or 6) if the convolutional neural network of the following document which can also be used to implement the present method (as shown on figure 4A):

- Yifan Sun, Liang Zheng, Yi Yang, Qi Tian, and Shengjin Wang. Beyond part models: Person retrieval with refined part pooling (and a strong convolutional baseline). In ECCV, 2018.

As explained above, for the graph convolutional neural network, the embeddings are $\left\{x_g^i \mid i = 1, \ldots, 5\right\}_t$, with $t = 1, \ldots, T$. During the training, all the embeddings are respectively input into $k + 5$ classifiers, as shown on figures 4A and 4B. Each classifier comprises a fully connected layer and a softmax activation, which is supervised by a cross-entropy loss:

$$L = \sum_{t=1}^{T} \sum_{i=1}^{k+5} \sum_{j \in ID} -\mathbb{1}(y_j) \log \frac{e^{W_{ij}^T x^{ij}}}{\sum_{j \in ID} e^{W_{ij}^T x^{ij}}}$$

Wherein $\mathbb{1}(y_j)$ is equal to 1 if the embedding x represents the j-th person in the dataset (i.e. it is an identifier which matches the expected identifier of the j-th person), and 0 otherwise. $W_{ij}$ is the j-th weight vector for the i-th classifier mentioned above. *ID* indicates the set of all identities in the training dataset (the set of all the different persons in the training dataset identified by their expected identifiers).

During inference, and if the input is a video sequence and not a single image, the embeddings on each frame are concatenated and then averaged over the temporal dimension, and the embeddings for the whole sequence respectively of the graph convolutional neural network and of the convolutional neural network are denoted as $x_g$ and $x_c$. As it has been observed that $x_c$ shows better performance than $x_g$ or than the concatenation of $x_g$ and $x_c$, only $x_c$ can be used during inference/testing.

Consequently, the graph convolutional neural network is not used during inference/testing, which advantageously limits the computation time and the memory consumption.

However, as the graph convolutional neural network is used during the training, $x_c$ is improved compared to the output of a convolutional neural network trained without the graph convolutional neural network since it benefits from the visual-graphical joint training with long-range semantic dependencies and temporal information, which is the fundamental advantage brought by keypoint message passing.

It should be noted that the training can be carried out using the stochastic gradient descent method through both the graph convolutional neural network and the convolutional neural network, once a loss has been calculated. By way of example, using the convolutional neural network of document "Beyond part models: Person retrieval with refined part pooling (and a strong convolutional baseline)", training can be performed using an initial learning rate of 0.1 decayed by 1/10 every 20 epochs. A convergence of the training has been observed after 60 epochs.

With respect to the state of the art, the present method has been observed to show better results than methods from the prior art, using the score known to the person skilled in the art as mAP (mean Average Precision) on the dataset known as MARS described in the following document:

- Liang Zheng, Zhi Bie, Yifan Sun, Jingdong Wang, Chi Su, Shengjin Wang, and Qi Tian. Mars: A video benchmark for large-scale person re-identification. In ECCV, 2016.

Also, the present method has been observed to provide top-1 scores comparable to the following methods:

- Zhizheng Zhang, Cuiling Lan, Wenjun Zeng, and Zhibo Chen. Multi-granularity reference-aided attentive feature aggregation for video-based person re-identification. In CVPR, 2020.
- Jinrui Yang, Wei-Shi Zheng, Qize Yang, Ying-Cong Chen, and Qi Tian. Spatial-temporal graph convolutional network for video-based person re-identification. In CVPR, 2020.
- Yichao Yan, Jie Qin, Jiaxin Chen, Li Liu, Fan Zhu, Ying Tai, and Ling Shao. Learning multi-granular hypergraphs for video-based person re-identification. In CVPR, 2020.
- Ruibing Hou, Hong Chang, Bingpeng Ma, Shiguang Shan, and Xilin Chen. Temporal complementary learning for video person re-identification. In ECCV, 2020.

However, the above methods are more costly in terms of computations.

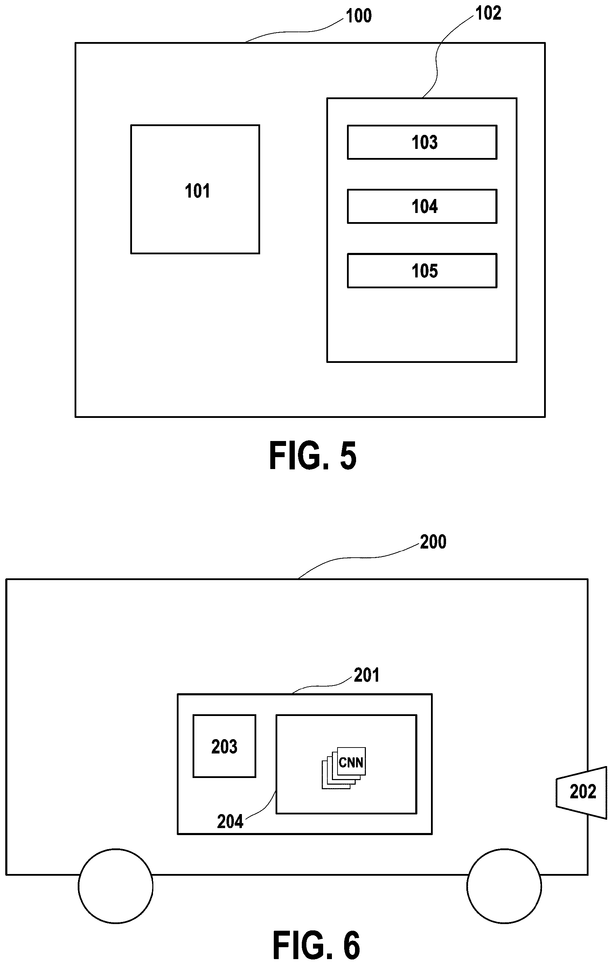

Figure 5 shows a system 100 for training the above defined convolutional neural network. This system comprises a processor 101 and has the structure of a computer system.

It also comprises a nonvolatile memory 102 on which the convolutional neural network 103 and the graph convolutional neural network 104 are stored. Computer program instructions 105 for performing the training are also stored in the nonvolatile memory. The computer program instructions 105 and the processor 101 form a training module configured to jointly train the convolutional neural network and the graph convolutional neural network, using the method as defined above.

Figure 6 is a schematic representation of a vehicle 200, here a car, equipped with a system 201 for delivering an identifier of a person visible on an image acquired by camera 202.

The system 201 comprises a processor 203 and a non-volatile memory 204 in which the convolutional neural network is stored after the training as defined above has been performed.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

**Claims**

1. A method for training a convolutional neural network to deliver an identifier of a person visible on an image when the image is inputted to the convolutional neural network, the method comprising:

    a. obtaining a training dataset including :

        - at least one sequence of a plurality of consecutive images ($I_t$, $I_{t+1}$, $I_{t+2}$) on which a same person is visible in a scene at a plurality of different consecutive instants, and
        - annotations including an expected identifier of the person, the annotations also indicating where, on each image of the plurality of consecutive images, a skeleton representation of the person is positioned, the skeleton representation being a graph having keypoints (KL) located at the joints of the skeleton and spatial edges connecting the keypoints so as to form a given skeleton representation,

    b. inputting the plurality of consecutive images of the same person to the convolutional neural network (CNN) so as to obtain, for each image, N feature maps (FM1, FM2) outputted by N layers of the convolutional neural network associated with an image,
    c. for each feature map obtained in step b from a same layer of the convolutional neural network, extracting the features located at keypoint relative locations of the skeleton representation obtained from the annotations of the image associated with the feature map, so as to obtain keypoint features (RK1, RK2) of a layer of the convolutional neural network,
    d. forming consecutively N graphs (STG1, STG2, STG3, STG4) each associated with a layer of the convolutional neural network and consecutively processing each graph in a respective stage (G1, G2, G3, G4) of a graph convolutional neural network having N-1 stage, each graph having:

- nodes relatively located at every keypoint feature obtained at step c for the associated layer,
- spatial edges connecting the keypoints obtained from a same feature map so as to form a skeleton representation, and
- temporal edges connecting the keypoints obtained from feature maps associated with the layer and obtained from consecutive images and corresponding to a same keypoint in the skeleton representation, wherein the value of each node of each graph is equal to the sum of the keypoint feature in the associated layer at the corresponding relative location and, if it exists, the corresponding node value outputted by the graph convolutional neural network stage which has processed the preceding graph,

   e. obtaining at least one identifier of a person from the convolutional neural network for each image the plurality of consecutive images and from the output of the graph convolutional neural network so as to calculate a loss using the expected identifier of the person, and
   f. jointly back-propagating the loss calculated in step e in the convolutional neural network and in the graph convolutional neural network.

2. The method of claim 1, wherein N equals 5.

3. The method of claim 1 or 2, wherein the graph convolution operation for obtaining a value at a node of a layer $l + 1$ of the graph convolutional neural network is calculated using the value of the corresponding node of layer $l$ and the values of the nodes of layer $l$ connected by spatial and temporal edges to this node.

4. The method of any one of claims 1 to 3, wherein step e comprises obtaining a number k of identifiers by a pooling operation from the final feature map of the convolutional neural networks, obtaining k identifiers by a pooling operation on the final graph of the graph convolutional neural network, with each identifier obtained from the graph convolutional neural network being associated with a different portion of the graph.

5. A system for training a convolutional neural network to deliver an identifier of a person visible on an image when the image is inputted to the convolutional neural network, comprising a processor and configured to perform the method in accordance with any one of claims 1 to 4.

6. A convolutional neural network trained by the method in accordance with any one of claims 1 to 4.

7. A system including the convolutional neural network of claim 6 stored on a support and a camera.

8. A vehicle including the system of claim 7.

9. A computer program including instructions for executing the steps of a method according to any one of claims 1 to 4 when said program is executed by a computer.

10. A recording medium readable by a computer and having recorded thereon a computer program including instructions for executing the steps of a method according to any one of claims 1 to 4.

FIG. 1

EP 4 099 213 A1

**FIG. 2A**　　　　**FIG. 2B**　　　　**FIG. 2C**

frame $t-1$

frame $t$

frame $t+1$

**FIG. 2B**

feature map     *k* embeddings     ID classifications

pooling     classifiers

**(a) Visual branch**

node features     5 embeddings     ID classifications

pooling     classifiers

**(b) Graphical branch**

# FIG. 4

**FIG. 5**

**FIG. 6**

Europäisches
Patentamt

European
Patent Office

Office européen
des brevets

# EUROPEAN SEARCH REPORT

Application Number

EP 21 17 6982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SIJIE YAN ET AL: "Spatial Temporal Graph Convolutional Networks for Skeleton-Based Action Recognition", ARXIV.ORG, CORNELL UNIVERSITY LIBRARY, 201 OLIN LIBRARY CORNELL UNIVERSITY ITHACA, NY 14853, 23 January 2018 (2018-01-23), XP081208953, * the whole document * | 1-10 | INV. G06K9/00 |
| A,D | YANG JINRUI ET AL: "Spatial-Temporal Graph Convolutional Network for Video-Based Person Re-Identification", 2020 IEEE/CVF CONFERENCE ON COMPUTER VISION AND PATTERN RECOGNITION (CVPR), IEEE, 13 June 2020 (2020-06-13), pages 3286-3296, XP033805221, DOI: 10.1109/CVPR42600.2020.00335 [retrieved on 2020-08-03] * the whole document * | 1-10 | |

TECHNICAL FIELDS
SEARCHED (IPC)

G06K

The present search report has been drawn up for all claims

| Place of search | Date of completion of the search | Examiner |
|---|---|---|
| The Hague | 17 November 2021 | Valencia, Erika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YIFAN SUN ; LIANG ZHENG ; YI YANG ; QI TIAN ; HENGJIN WANG.** Beyond part models: Person retrieval with refined part pooling (and a strong convolutional baseline). *ECCV,* 2018
- **SIJIE YAN ; YUANJUN XIONG ; DAHUA LIN.** Spatial temporal graph convolutional networks for skeleton-based action recognition. *AAAI,* 2018
- **NA LI ; XINBO ZHAO ; CHONG MA.** A model-based gait recognition method based on gait graph convolutional networks and joints relationship pyramid mapping. *arXiv preprint arXiv:2005.08625,* 2020
- **TSUNG-YI LIN ; MICHAEL MAIRE ; SERGE BELONGIE ; JAMES HAYS ; PIETRO PERONA ; DEVA RAMANAN ; PIOTR DOLL'AR ; C LAWRENCE ZITNICK.** Microsoft coco: Common objects in context. *ECCV,* 2014
- **GUOHAO LI ; CHENXIN XIONG ; ALI THABET ; BERNARD GHANEM.** Deepergcn: All you need to train deeper gens. *arXiv preprint arXiv:2006.07739,* 2020
- **NA LI ; XINBO ZHAO ; CHONG MA.** A model-based gait recognition method based on gait graph convolutional networks and joints relationship pyramid mapping. *arXiv preprint arXiv: 2005.08625,* 2020
- **YIFAN SUN ; LIANG ZHENG ; YI YANG ; QI TIAN ; SHENGJIN WANG.** Beyond part models: Person retrieval with refined part pooling (and a strong convolutional baseline). *ECCV,* 2018

- **KAIMING HE ; XIANGYU ZHANG ; SHAOQING REN ; JIAN SUN.** Deep residual learning for image recognition. *CVPR*
- **GUOHAO LI ; CHENXIN XIONG ; ALI THABET ; BERNARD GHANEM.** Deepergcn: All you need to train deeper gcns. *arXiv preprint arXiv:2006.07739,* 2020
- **ZHEDONG ZHENG ; LIANG ZHENG ; YI YANG.** A discriminatively learned cnn embedding for person reidentification. *ACM Transactions on Multimedia Computing, Communications, and Applications (TOMM),* 2017, vol. 14 (1), 1-20
- **LIANG ZHENG ; ZHI BIE ; YIFAN SUN ; JINGDONG WANG ; CHI SU ; SHENGJIN WANG ; QI TIAN.** Mars: A video benchmark for large-scale person re-identification. *ECCV,* 2016
- **ZHIZHENG ZHANG ; CUILING LAN ; WENJUN ZENG ; ZHIBO CHEN.** Multi-granularity reference-aided attentive feature aggregation for video-based person re-identification. *CVPR,* 2020
- **JINRUI YANG ; WEI-SHI ZHENG ; QIZE YANG ; YING-CONG CHEN ; QI TIAN.** Spatial-temporal graph convolutional network for video-based person re-identification. *CVPR,* 2020
- **YICHAO YAN ; JIE QIN ; JIAXIN CHEN ; LI LIU ; FAN ZHU ; YING TAI ; LING SHAO.** Learning multi-granular hypergraphs for video-based person re-identification. *CVPR,* 2020
- **RUIBING HOU ; HONG CHANG ; BINGPENG MA ; SHIGUANG SHAN ; XILIN CHEN.** Temporal complementary learning for video person re-identification. *ECCV,* 2020